# EUROPEAN PATENT APPLICATION

(11) **EP 0 642 082 A1**
(43) Date of publication of application: **08.03.1995**
(21) Application number: 94114154.1
(22) Date of filing: 08.09.1994
(51) Int. Cl.: G06F 11/24, G06F 11/26

(54) **Microprogrammed microcomputer capable of dynamic burn-in test screening operation**

(30) Priority: 08.09.1993 JP 222946/93
(71) Applicant: NEC CORPORATION, Tokyo (JP)
(72) Inventor: Miyazaki, Tatsuhiro, c/o NEC IC Microcomputer, Nakahara-ku, Kawasaki-shi, Kanagawa (JP)
(74) Representative: Betten & Resch

(57) **Abstract**

In a microcomputer including a microprogram storing memory (1) for receiving a first address information signal (ADD1) to generate control signals (C1, C2,...) and a second address information signal (ADD2), there is provided a selector (2') for receiving the second addressing signal, an operation code signal as a third address information signal (ADD3) and a fourth address information signal (ADD4) from a counter (7). In a burn-in test mode, the selector selects the fourth address information signal and transmits it as the first address information signal to the microprogram storing memory.

## Description

### BACKGROUND OF THE INVENTION

### Field of the Invention

The present invention relates to a microprogrammed microcomputer capable of a dynamic burn-in test screening operation.

### Description of the Related Art

In a prior art, in order to eliminate defective microcomputers resulting from time and stress due to inherent defects or manufacturing fluctuations, a burn-in test screening method is carried out at a stage of testing at shipment. As typical burn-in test screening methods, there are a static burn-in test screening method and a dynamic burn-in test screening method.

In a static burn-in test screening method for a microcomputer, all of the input/output terminals are made to b at special levels, and power supply voltages are applied to power supply terminals, so that the microcomputer is not operated. This microcomputer is left alone in a high temperature state. In the static burn-in test screening method, since the microcomputer is not operated, stress is not equally applied to all of the transistors of the microcomputer, thus obtaining only a small burn-in test screening effect.

On the other hand, in a dynamic burn-in test screening method for a microcomputer, the microcomputer is operated and left alone in a high temperature state. As a result, voltages are applied to all of the transistors of the microcomputer, so that stress is applied to all of the transistors as equally as possible, thus enhancing the burn-in test screening effect.

In a dynamic burn-in test screening method for a prior art read-only memory (ROM)-incorporating single-chip microcomputer, a clock signal is supplied from the exterior to a central processing unit (CPU), and as a result, instructions are read out of the ROM and are carried out in the same way as in usual processing, to thereby enhance the burn-in test screening effect. However, if jump (branch) instructions for looping a program, conditional instructions and the like are present stored in the ROM, only special addresses of the ROM are looped to carry out only special loops, so that the program is locked in the loop. In this case, all of the transistors are not always operated, and thus, it is impossible to enhance the burn-in test screening effect. In order to avoid the above-described problem, the CPU invalidates any jump instructions, and therefore, it is possible to carry out all of the instructions stored in the ROM except for the jump instructions, thus enhancing the burn-in test screening effect (see: JP-A-SHO60-31652) . This will be explained later in detail.

However, in the above-described prior art microcomputer, in order to effectively carry out a dynamic burn-in test screening method, the presence of a ROM is indispensible. Therefore, it is impossible to perform a dynamic burn-in test screening method upon a microprogrammed microcomputer without such a ROM.

### SUMMARY OF THE INVENTION

It is an object of the present invention to provide a microprogrammed microcomputer capable of a dynamic burn-in test screening method.

According to the present invention, in a microcomputer including a microprogram storing memory for receiving a first address information signal to generate control signals and a second address information signal, there is provided a selector for receiving the second addressing signal, an operation code signal as a third address information signal and a fourth address information signal from a counter. In a burn-in test mode, the selector selects the fourth address information signal and transmits it as the first address information signal to the microprogram storing memory. Thus, in a burn-in test mode, all of the instructions of the microprogram storing memory are sequentially carried out by the output of the counter.

### BRIEF DESCRIPTION OF THE DRAWINGS

The present invention will be more clearly understood from the description as set forth below, in comparison with the prior art, with reference to the accompanying drawings, wherein:
Fig. 1 is a block diagram illustrating a prior art ROM incorporating single-chip microcomputer;
Fig. 2 is a block circuit diagram illustrating a prior art microprogrammed microcomputer;
Fig. 3 is a detailed circuit diagram of the selector of Fig. 2;
Fig. 4 is a table showing the correspondence between the control signal and the output of the selector of Fig. 3;
Fig. 5 is a block circuit diagram illustrating an embodiment of the microprogrammed microcomputer according to the present invention;
Fig. 6 is a detailed circuit diagram of the selector of Fig. 5;
Fig. 7 is a table showing the correspondence between the control signals and the output of the selector of Fig. 6; and
Fig. 8 is a block diagram illustrating an modification of the microprogrammed microcomputer of Fig. 5.

### DESCRIPTION OF THE PREFERRED EMBODIMENT

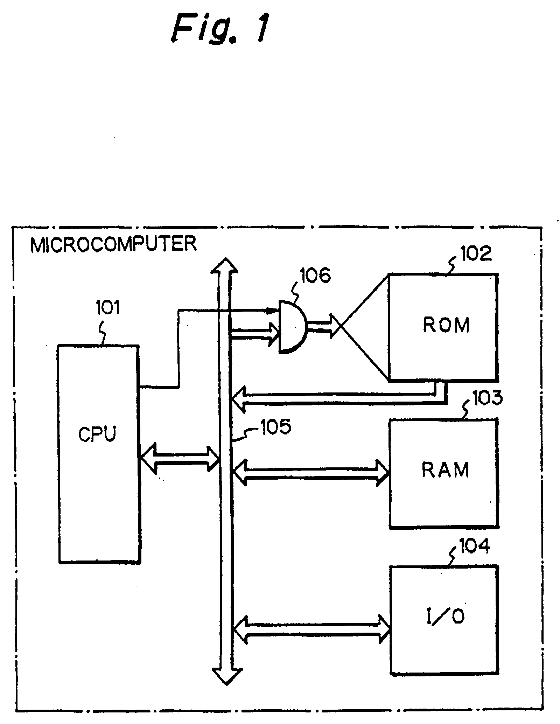

Before the description of the preferred embodiment, prior art microcomputers will be explained with reference to Figs. 1, 2 and 3.

In Fig. 1, which illustrates a prior art ROM incorporating single-chip microcomputer (see: JP-A-SHO60-31652), reference 101 designates a CPU, 102 designates a ROM, 103 designates a random access memory (RAM), and 104 designates an input/output interface. The CPU 101, the ROM 102, the RAM 103 and the input/output interface 104 are interconnected by an internal bus 105. Reference 106 designates an AND circuit for invalidating a jump instruction when the jump instruction is fetched from the ROM 102. That is, in a burn-in test screening mode, an instruction of the ROM 102 is fetched and carried out; however, when a jump instruction is fetched from the ROM 102, the CPU 101 generates a control signal and transmits it to the AND circuit 106, thus invalidating the jump instruction. Then, the next instruction is fetched and executed. Therefore, in a dynamic burn-in test screening mode, it is possible to carry out all of the instructions stored in the ROM 102 except for the jump instructions.

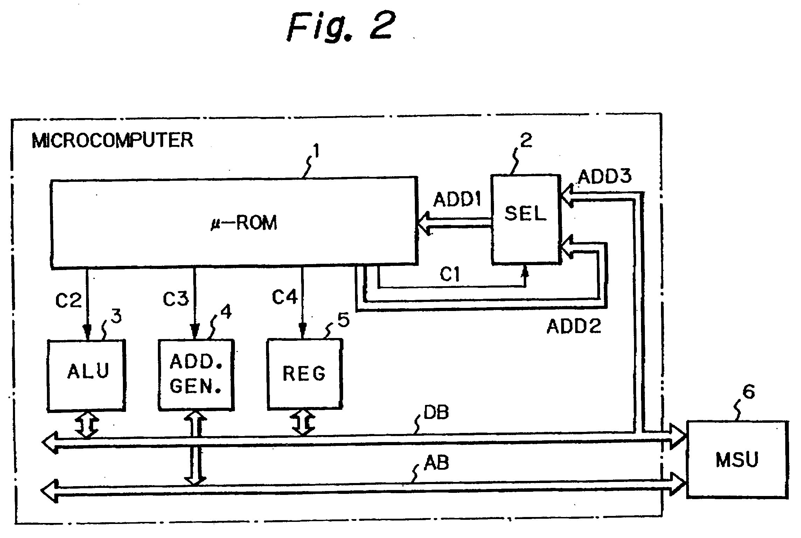

In Fig. 2, which illustrates a prior art microprogrammed microcomputer, reference numeral 1 designates a microprogrammed ROM for receiving an address information signal ADD1 to generate various control signals C1, C2, C3 and C4, and an address information signal ADD2.

The address information signal ADD2 is supplied to a selector 2 which also receives an operation code as an address information signal ADD3 from a data bus DB. The selector 2 is controlled by the control signal C1 to select one of the address information signals ADD2 and ADD3.

An arithmetic and logic (ALU) 3 is connected between the microprogrammed ROM 1 and the data bus DB, and is controlled by the control signal C2. Also, an address generating circuit 4 is connected between the microprogrammed ROM 1 and an address bus AB, and is controlled by the control signal C3. Further, a register 5 is connected between the microprogrammed ROM 1 and the data bus DB, and is controlled by the control signal C4. Other hardware such as a program counter (PC) is present; however, such hardware is omitted to simplify the description.

Reference numeral 6 designates a storage unit for generating an operation code and transmitting it to the data bus DB.

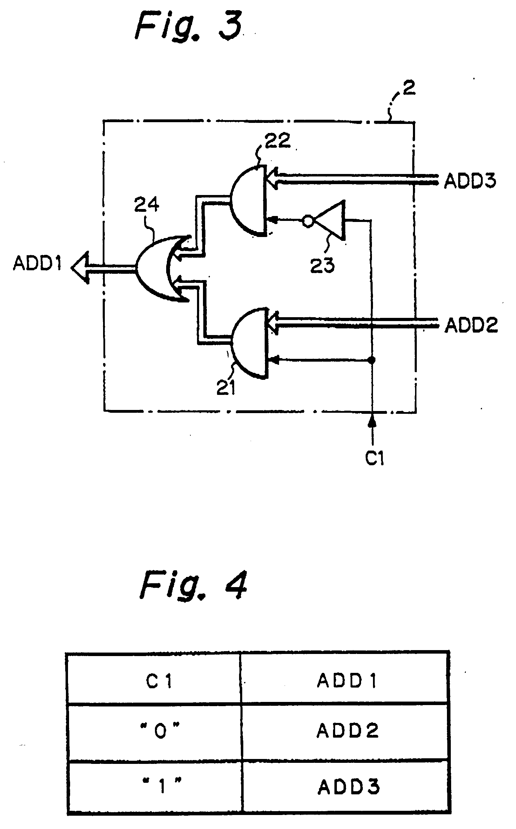

In Fig. 3, which is a detailed circuit diagram of the selector 2 of Fig. 2, the selector 2 includes a AND circuit 21 for passing the address information signal ADD2 therethrough in response to the control signal C1, an AND circuit 22 for passing the address information signal ADD3 therethrough in response to the control signal C1 via an inverter 23, and an OR circuit 24 for passing one of the address information signals ADD2 and ADD3 therethrough. That is, when the control signal C1 is "1", the address information signal ADD2 is selected by the selector 2, and is transmitted as the address signal ADD1 to the microprogrammed ROM 1. Conversely, when the control signal C1 is "0", the address information signal ADD3 is selected by the selector 2, and is transmitted as the address signal ADD1 to the microprogrammed ROM 1. Thus, the correspondence between the control signal C1 and the output signal ADD1 is represented by a table as shown in Fig. 4.

In the microprogrammed microcomputer of Fig. 2, however, in a dynamic burn-in test screening mode, all of the instructions are stored in the microprogrammed ROM 1, and therefore, a large burn-in test screening effect cannot be expected.

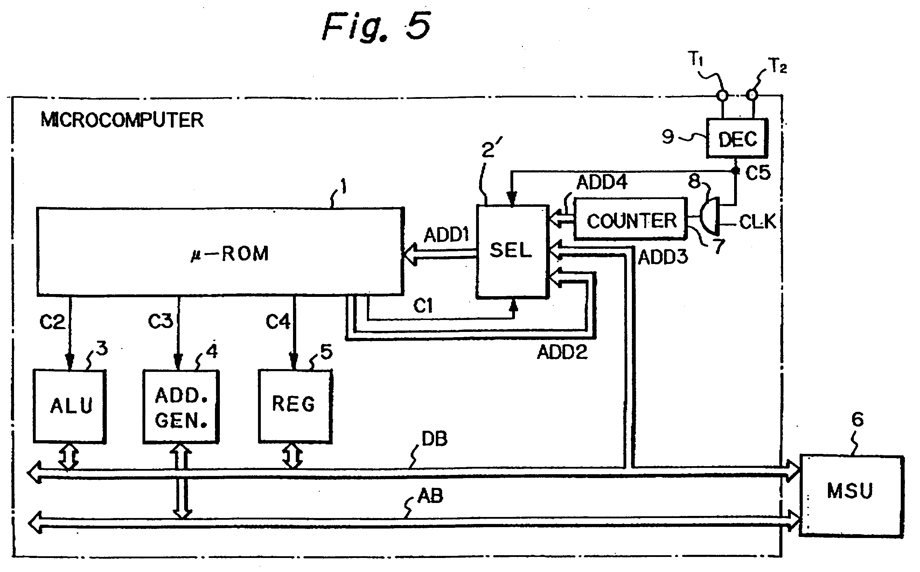

In Fig. 5, which illustrates an embodiment of the present invention, a counter 7 for generating an address information signal ADD4, an AND circuit 8 and a decoder 9 are added to the elements of Fig. 2. Also, a selector 2' is provided instead of the selector 2 of Fig. 2. That is, the decoder 9 determines whether the microcomputer of Fig. 4 is in a usual processing state or in a dynamic burn-in test screening state by the potentials at terminals T1 and T2. For example, when the potentials at the terminals T1 and T2 are high and low, respectively, the decoder 9 determines that the microcomputer of Fig. 4 is in a dynamic burn-in test screening state, thus making a control signal C5 high (=" 1"). As a result, in a dynamic burn-in test screening state (C5="1"), the counter 7 counts a clock signal CLK from a clock signal generating circuit (not shown), and the selector 2' selects the address information signal ADD4 from the counter 7 and transmits it as the address information signal ADD1 to the microprogrammed ROM 1. Note that the counter 7 has a large capacity so that the count value can reach a maximum address of the microprogrammed ROM 1.

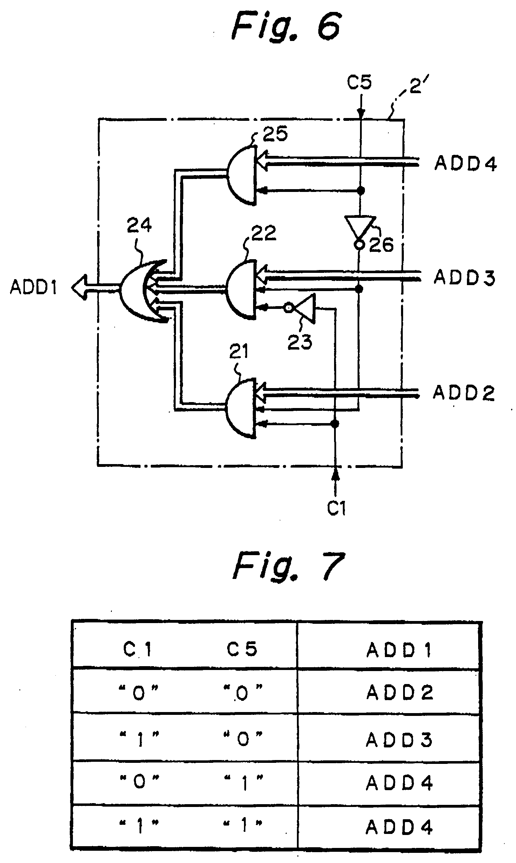

In Fig. 6, which is a detailed circuit diagram of the selector 2' of Fig. 5, an AND circuit 25 for passing the address information signal ADD4 therethrough in response to the control signal C5, and an inverter 26 are added to the elements of Fig. 3. Also, the AND circuits 21 and 22 are controlled by the control signal C5 via the inverter 26, Further, the OR circuit 24 passes one of the address information signals ADD2, ADD3 and ADD4. That is, in a usual processing state (C5="0"), the AND circuits 21 and 22 are enabled and the AND circuit 25 is disabled, so that the selector 2' serves as the selector 2 of Fig. 3. Conversely, in a dynamic burn-in test screening state (C5="1"), the AND circuits 21 and 22 are disabled and the AND circuit 25 is enabled, so that the address information signal ADD4 is transmitted as the address information signal ADD1 to the microprogrammed ROM 1. Thus, the correspondence between the control signals C1 and C5 and the output signal ADD1 is represented by a table as shown in Fig. 7.

Therefore, in a dynamic burn-in test screening state, the microprogrammed ROM is fetched sequentially by the address information signal ADD4 of the counter 7, so that all of the instructions stored in the microprogrammed ROM 1 are carried out. Thus, all of the possible operations are performed upon the ALU3, the address generating circuit 4, the register 5, and the other hardware, thus enhancing the dynamic burn-in test screening effect.

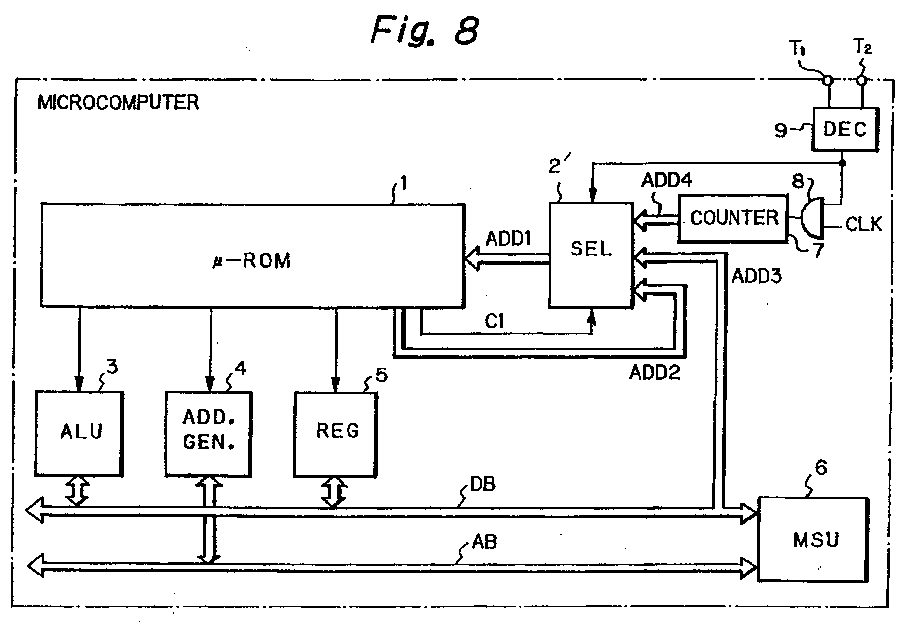

Also, the present invention can be a microcomputer incorporating the storage unit 6, as illustrated in Fig. 8.

As explained hereinbefore, according to the present invention, in a dynamic burn-in test screening state, since all of the instructions stored in a microprogrammed memory are fetched and carried out, the dynamic burn-in test screening effect can be enhanced.

## Claims

1. A microcomputer comprising:
a microprogram storing memory (1) for receiving a first address information signal (ADD1) to generate a control signal (C1) and a second address information signal (ADD2);
means (DB) for receiving an operation code signal as a third address information signal (ADD3);
a counter (7) for generating a fourth address information signal (ADD4); and
a selector (2'), connected to said microprogram storing memory, said operation code receiving means and said counter, for selecting one of said second, third and fourth address signals and transmitting it as the first address information signal to said microprogram storing memory.

2. A microcomputer as set forth in claim 1, wherein said selector receives a burn-in test signal (C5), to thereby select the third address information signal.

3. A microcomputer as set forth in claim 2, wherein said selector comprises:
a first gate means (21), connected to said microprogram storing memory and controlled by the control signal and the burn-in test signal, for passing the second address information signal as the first address information signal to said microprogram storing memory when the burn-in test signal is inactive and the control signal is in a first state;
a second gate means (22), connected to said microprogram storing memory and controlled by the control signal and the burn-in test signal, for passing the third address information signal as the first address information signal to said microprogram storing memory when the burn-in test signal is inactive and the control signal is in a second state;
a third gate means (25), connected to said counter and controlled by the burn-in test signal, for passing the fourth address information signal as the first address information signal to said microprogram storing memory when the burn-in test signal is active; and
a fourth gate means (24), connected to said first, second and third gate means, and to said microprogram storing memory, for passing one of the second, third and fourth address information signals as the first address information signal to said microprogram storing memory.

4. A microcomputer as set forth in claim 2, further comprising:
at least two terminals (T1, T2); and
a decoder (9), connected between said terminals and said selector, for generating the burn-in test signal in response to the potential at said terminals and transmitting it to said selector.

5. A microcomputer as set forth in claim 1, further comprising an operation code generating means (6).

6. A microcomputer as set forth in claim 1, being connected to an external memory (6) for generating the operation code.

7. A microcomputer as set forth in claim 1, further comprising:
a data bus (DB);
an address bus (AB);
an arithmetic and logic unit (3) connected between said microprogram storing memory and said data bus;
an address generating circuit (4) connected between said microprogram storing memory and said address bus; and
a register (5) connected between said microprogram storing memory and said data bus.

8. A microcomputer as set forth in claim 7, wherein said operation code signal receiving means comprises said data bus.
